(19) Europäisches Patentamt
European Patent Office
Office européen des brevets

(11) **EP 2 423 287 A1**

(12) **EUROPEAN PATENT APPLICATION**

(43) Date of publication:
**29.02.2012 Bulletin 2012/09**

(51) Int Cl.:
*C09J 7/02* (2006.01)   *H01M 2/08* (2006.01)
*C08L 23/22* (2006.01)   *C09J 123/22* (2006.01)

(21) Application number: **11179030.9**

(22) Date of filing: **26.08.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.08.2010 JP 2010191156**

(71) Applicant: **NITTO DENKO CORPORATION**
**Ibaraki-shi, Osaka 567-8680 (JP)**

(72) Inventors:
• **Kamitani, Mitsuru**
**Ibaraki-shi, Osaka 567-8680 (JP)**

• **Iwata, Jun**
**Ibaraki-shi, Osaka 567-8680 (JP)**
• **Hanai, Hiroomi**
**Ibaraki-shi, Osaka 567-8680 (JP)**
• **Terashima, Tadashi**
**Ibaraki-shi, Osaka 567-8680 (JP)**

(74) Representative: **Grünecker, Kinkeldey,**
**Stockmair & Schwanhäusser**
**Anwaltssozietät**
**Leopoldstrasse 4**
**80802 München (DE)**

(54) **Pressure-Sensitive Adhesive Tape for Non-Aqueous Battery**

(57) The present invention relates to a pressure-sensitive adhesive tape for a non-aqueous battery, containing: a substrate and a pressure-sensitive adhesive layer on at least one side of the substrate, in which the pressure-sensitive adhesive layer contains 90 wt% or more of a polyisobutylene rubber, and in which a content of a polyisobutylene rubber having a molecular weight of 800,000 to 2,200,000 is in the range of 15 to 50 wt% based on the entire pressure-sensitive adhesive layer, a content of a polyisobutylene rubber having a molecular weight of 10,000 to 700,000 is in the range of 35 to 70 wt% based on the entire pressure-sensitive adhesive layer, and a content of a component having a molecular weight of 10,000 or less is 5 wt% or less based on the entire pressure-sensitive adhesive layer.

FIG. 1

EP 2 423 287 A1

**Description**

TECHNICAL FIELD

The present invention relates to a pressure-sensitive adhesive tape that is used in manufacturing of a non-aqueous battery, and more particularly, to a pressure-sensitive adhesive tape that is applied to a portion immersed in an electrolytic solution in a non-aqueous battery, or a portion having a possibility of coming into contact with the electrolytic solution.

BACKGROUND ART

In a battery, such as a lithium ion battery, in which a non-aqueous electrolytic solution is sealed, pressure-sensitive adhesive tapes, for example, for fixing a core, for insulating a withdrawal slot of electrodes, for fixing terminals and for insulation spacers, are used for the purpose of improving an insertion competence of electrodes into a battery case and for the purpose of preventing a short-circuit between electrodes caused by penetration of the burr existing on the electrode plate through the separator. As an exemple of such a pressure-sensitive adhesive tape, a pressure-sensitive adhesive tape using an acrylic pressure-sensitive adhesive layer or a natural rubber-based pressure-sensitive adhesive layer as an pressure-sensitive adhesive layer is commonly used.

However, in order to improve safety of the battery, a pressure-sensitive adhesive tape has been used recently even at a lead portion of an electrode disposed inside a winding structure of the battery. In this case, since high internal pressure is applied to an inner portion of the winding structure, the pressure-sensitive adhesive layer is likely to be deformed, and glue (pressure-sensitive adhesive layer) spread from the substrate easily comes into contact with the electrolytic solution. Then, since the lead portion is the highest reactive portion in the battery, the glue reacts with electrolytes in the electrolytic solution, such that the electrolytic solution deteriorates thereby deteriorating the overall characteristics of the battery. Specifically, when a pressure-sensitive adhesive tape having an acrylic pressure-sensitive adhesive layer is used in manufacturing of the battery, since a crosslinking point and a functional group of the acrylic pressure-sensitive adhesive layer causes a chemical reaction with the electrolyte in the electrolytic solution during a repeated charging and discharging under a high voltage, the battery is degraded. When a natural rubber-based pressure-sensitive adhesive layer is used, impurities containing a double bond in its structure may be included, and when the impurities containing a double bond flow out to the electrolytic solution, the battery becomes deteriorated.

Patent document 1 discloses that, in manufacturing a secondary battery such as a lithium ion battery using an organic electrolytic solution, using a pressure-sensitive adhesive tape obtained by forming a pressure-sensitive adhesive layer composed of polyisobutylene rubber and a saturated hydrocarbon resin on a substrate film that is stable in the organic electrolytic solution does not cause deterioration of the battery, and therefore, the power of the battery can be maintained at a high level.

Patent Document 1: JP 9-165557 A

SUMMARY OF THE INVENTION

However, the pressure-sensitive adhesive tape disclosed in patent document 1 uses a saturated hydrocarbon resin in order to impart an adhesion property, but it is difficult to completely eliminate the impurities containing a double bond in its structure because of the manufactureing method thereof. Thus, it is found that the battery deteriorates slowly during the repeated charging and discharging at a high voltage. In addition, batteries have been developed for higher capcity and higher power, but in this case, the reactivity between the pressure-sensitive adhesive layer and the electrolytic solution is further increased inside the battery, and, as a result, the electrolytic solution is more easily degraded. Accordingly, it is found that the power of the battery can not be maintained at a high level by using the pressure-sensitive adhesive tape as disclosed in patent document 1,

An object of the present invention is to provide a pressure-sensitive adhesive tape for a non-aqueous battery that improves an insertion conpetence of an electrode in a battery case and can prevent a short-circuit between electrodes caused by a burr existing on an electrode plate by using the tape in the battery in which the non-aqueous electrolytic solution is to be sealed without causing a decrease in power of the battery.

The present inventors made intensive investigations in order to solve the above problems and found out that a pressure-sensitive adhesive layer containing 90 wt% or more of a polyisobutylene rubber having a specific molecular weight distribution is difficult to be deformed even at a high pressure and difficult to spread from a substrate because the layer has an appropriate adhesive strength and a high cohesive property, and that the pressure-sensitive adhesive layer can considerably suppress deterioration of the electrolytic solution because the layer is difficult to be eluted to the electrolytic solution and even when the layer is eluted, the reactivity with the electrolytic solution is low.

In general, since a tackifier, an antioxidant and the like contained in the pressure-sensitive adhesive layer have a low molecular weight, these components are easily eluted to the electrolytic solution. The present inventors have recognized that the electrolytic solution is deteriorated by elution of these components, and reviewed the pressure-sensitive adhesive layer on the basis of the recognition, resulting in the finding that if the content of the component having the molecular weight of 10,000 or less is 5 wt% or less based on the pressure-sensitive adhesive layer, it is possible to suppress deterioration of the electrolytic solution. In addition, the present inventors found out that by combining these, an pressure-sensitive adhesive tape that can maintain the power of the battery at a high level can be provided, in which, even though the pressure-sensitive adhesive tape is applied to a portion that is immersed in the electrolytic solution of the non-aqueous battery or a portion having a possibility of coming into contact with the electrolytic solution, the pressure-sensitive adhesive layer is difficult to be eluted to the electrolytic solution, and even though the layer is eluted, since the reactivity with the electrolytic solution is low, it is possible to considerably suppress deterioration of the electrolytic solution. The present invention is accomplished on the basis of the above findings.

That is, the present invention provides a pressure-sensitive adhesive tape for a non-aqueous battery, comprising:

a substrate and

a pressure-sensitive adhesive layer provided on at least one side of the substrate,

wherein the pressure-sensitive adhesive layer contains 90 wt% or more of a polyisobutylene rubber, and

wherein a content of a polyisobutylene rubber having a molecular weight of 800,000 to 2,200,000 is in the range of 15 to 50 wt% based on the entire pressure-sensitive adhesive layer, a content of a polyisobutylene rubber having a molecular weight of 10,000 to 700,000 is in the range of 35 to 70 wt% based on the entire pressure-sensitive adhesive layer, and a content of a component having a molecular weight of 10,000 or less is 5 wt% or less based on the entire pressure-sensitive adhesive layer. In the present invention, the molecular weight means a molecular weight calculated as polystyrene.

It is preferred that the pressure-sensitive adhesive tape for a non-aqueous battery has a water absorption ratio, when allowed to stand under a condition of 23°C and 50% RH for 24 hours, of 3 wt% or less. Moreover, it is preferred that the pressure-sensitive adhesive tape has a piercing strength, obtained by the following measuring method, of 300 gf or more. Furthermore, it is also preferred that the the pressure-sensitive adhesive tape has a volume resistivity of $1 \times 10^{10}$ Ω·cm or more.

(The method for measuring a piercing strength)

The measuring method contains fixing the pressure-sensitive adhesive tape to a plate in which a circular hole having a diameter of 11.28 mm is formed, piercing a needle having a needleof which the end has a curvature diameter of 0.5 mm to the pressure-sensitive adhesive tape at a speed of 2 mm/s under 23 ± 2°C, and measuring a maximum load (gf) when the needle penetrates the pressure-sensitive adhesive tape.

Further, it is preferred that the pressure-sensitive adhesive layer has a gel fraction (solvent: ethylene carbonate/diethyl carbonate = 1/1) of 80 wt% or more.

According to the present invention, the adhesive tape for a non-aqueous battery of the present invention is used for fixing a terminal in a battery having a winding type electrode structure to allow an insertion operation of an electrode into a battery case to be easily performed, is attached to an electrode plate to prevent the occurrence of a short-circuit between electrodes caused by penetration of a burr existing on the electrode plate through a separator, and imparts a high safety and reliability to the battery. In addition, since the pressure-sensitive adhesive layer of the pressure-sensitive adhesive tape for a non-aqueous battery according to the present invention has the above configuration, the pressure-sensitive adhesive layer is difficult to be eluted to the electrolytic solution, and further, the pressure-sensitive adhesive layer is difficult to be deformed and the glue is difficult to spread from the substrate, even when the pressure-sensitive adhesive tape is used under a high pressure, for example, inside the winding type electrode structure. Accordingly, it is possible to considerably suppress the elution to the electrolytic solution, and even though the pressure-sensitive adhesive layer is eluted, since reactivity with the electrolyte in the electrolytic solution is low, it is possible to prevent deterioration of the electrolytic solution, thereby maintaining the power of the battery at a high level. The pressure-sensitive adhesive tape for a non-aqueous battery according to the present invention may exhibit the above effects in respect to the battery having a high capacity and high power.

BRIEF DESCRIPTION OF THE DRAWINGS

FIG. 1 is a schematic cross-sectional view showing one embodiment of the pressure-sensitive adhesive tape for a non-aqueous battery according to the present invention.

FIG. 2 is a schematic cross-sectional view showing another embodiment of the pressure-sensitive adhesive tape for a non-aqueous battery according to the present invention.

FIG. 3 is a schematic view showing a measuring method of piercing strength of the pressure-sensitive adhesive tape.

DESCRIPTION OF REFERENCE NUMERALS AND SIGNS

1:          Substrate

2,2A, 2B:     Pressure-sensitive adhesive layer

3:          Pressure-sensitive adhesive tape for a non-aqueous battery

4A, 4B:      Fixing plate

5:          Piercing needle

MODES FOR CARRYING OUT THE INVENTION

Hereinafter, embodiments of the present invention will be described in detail with reference to the drawings, if necessary.

A pressure-sensitive adhesive tape for a non-aqueous battery according to the present invention has a substrate and a pressure-sensitive adhesive layer on at least one side of the substrate. In particular, the pressure-sensitive adhesive layer contains 90 wt% or more of a polyisobutylene rubber. Further, a content of a polyisobutylene rubber having a molecular weight of 800,000 to 2,200,000 is in the range of 15 to 50 wt% based on the entire pressure-sensitive adhesive layer, a content of a polyisobutylene rubber having a molecular weight of 10,000 to 700,000 is in the range of 35 to 70 wt% based on the entire pressure-sensitive adhesive layer, and a content of a component having a molecular weight of 10,000 or less is 5 wt% or less based on the entire pressure-sensitive adhesive layer.

The pressure-sensitive adhesive tape for a non-aqueous battery according to the present invention has a pressure-sensitive adhesive layer on at least one side of a substrate. It may be a single-coated pressure-sensitive adhesive tape having a pressure-sensitive adhesive layer on only one side of a substrate, or a double-coated pressure-sensitive adhesive tape having pressure-sensitive adhesive layers on both sides of a substrate.

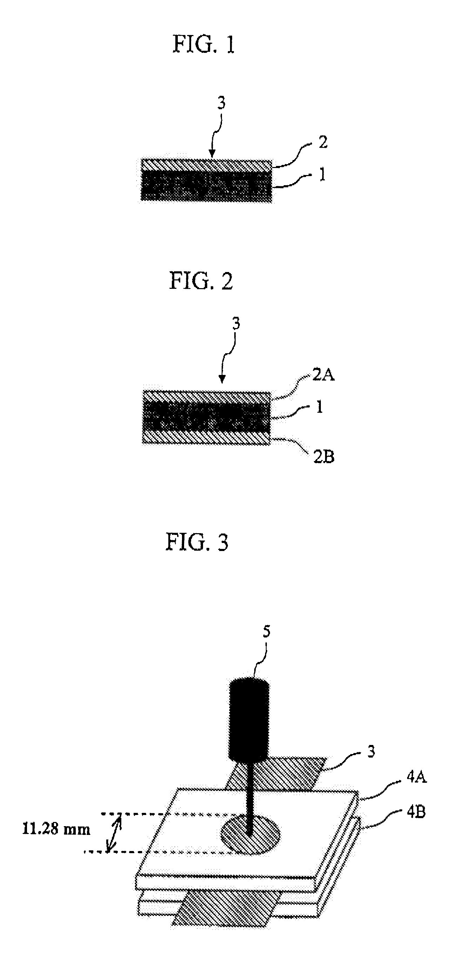

FIG. 1 is a schematic cross-sectional view showing one embodiment of the pressure-sensitive adhesive tape 3 for a non-aqueous battery according to the present invention. The pressure-sensitive adhesive layer 2 is provided on one side of the substrate 1.

FIG. 2 is a schematic cross-sectional view showing another embodiment of the pressure-sensitive adhesive tape 3 for a non-aqueous battery according to the present invention. Pressure-sensitive adhesive layers 2A and 2B are provided on both sides of the substrate 1.

[Pressure-sensitive adhesive layer]

The pressure-sensitive adhesive layer according to the present invention contains 90 wt% or more of a polyisobutylene rubber. In particular, a content of a polyisobutylene rubber having a molecular weight of 800,000 to 2,200,000 is in the range of 15 to 50 wt% based on the entire pressure-sensitive adhesive layer, content of a polyisobutylene rubber having a molecular weight of 10,000 to 700,000 is in the range of 35 to 70 wt% based on the entire pressure-sensitive adhesive layer, and a component having a molecular weight of 10,000 or less is 5 wt% or less based on the entire pressure-sensitive adhesive layer.

The pressure-sensitive adhesive layer contians 90 wt% or more of polyisobutylene rubber (e.g., preferably 95 wt% or more, and particularly preferably 98 wt% or more). If the content of the polyisobutylene rubber is lower than the above range, the elution amount of the component constituing the pressure-sensitive adhesive layer to the electrolytic solution in the non-aqueous battery is increased, and therefore it may be difficult to suppress deterioration of the electrolytic solution.

The pressure-sensitive adhesive layer may be prepared by, for example, blending 100 parts by weight of polyisobutylene having a weight average molecular weight of 800,000 to 1,500,000 with 10 to 50 parts by weight of polyisobutylene having a weight average molecular weight of 10,000 to 500,000.

Since the pressure-sensitive adhesive tape for a non-aqueous battery according to the present invention has the pressure-sensitive adhesive layer containing 90 wt% or more of polyisobutylene rubber, it is possible to considerably suppress the elution to the electrolytic solution of the non-aqueous battery. Moreover, since the polyisobutylene rubber has a small amount of double bonds in its molecule which in turn has a low degree of unsaturation and does not have any functional groups, the reactivity with the electrolyte in the electrolytic solution is low even though the rubber is eluted to the electrolytic solution, therefore it is possible to prevent deterioration of the electrolytic solution. When ethylene carbonate /diethyl carbonate (1:1) are used as the electrolytic solution for example, the gel fraction of the pressure-sensitive adhesive layer in respect to the electrolytic solution may preferably be, for example, 80 wt% or more (e.g., more preferably 90 wt% or more, and particularly preferably 93 wt% or more).

The gel fraction in the present invention means a percentage of the weight of the components insoluble to the electrolytic solution (in respect to an initial weight) obtained by the following method.

The weight ($A_0$) of the pressure-sensitive adhesive layer before immersing in the electrolytic solution is determined by measuring the weight of the pressure-sensitive adhesive layer (about 0.2 g) collected from the pressure-sensitive adhesive tape.

Continuously, the pressure-sensitive adhesive layer is immersed in the electrolytic solution (ethylene carbonate:diethyl carbonate = 1:1) (50 ml) for 3 days under an atmosphere of 40°C and the component dissolved in the electrolytic solution is extracted.

Subsequently, only the insoluble component is collected and heated at 120°C for 1 hour to evaporate the electrolytic solution, the weight (A1) of the pressure-sensitive adhesive layer after immersing in the electrolytic solution is determined by measuring the weight again, and the following calculation is performed.

$$\text{Gel fraction (wt\%)} = A1 \times 100/A0$$

$A_0$: Weight of the pressure-sensitive adhesive layer before immersing in the electrolytic solution
$A_1$: Weight of the pressure-sensitive adhesive layer after immersing in the electrolytic solution

The pressure-sensitive adhesive tape for a non-aqueous battery according to the present invention contains, in the pressure-sensitive adhesive layer, a polyisobutylene rubber having a molecular weight of 800,000 to 2,200,000 (it may be referred to as "high molecular weight polyisobutylene rubber") in the range of 15 to 50 wt% (preferably 15 to 35 wt%) based on the entire pressure-sensitive adhesive layer, and a polyisobutylene rubber having a molecular weight of 10,000 to 700,000 (it may be referred to as "low molecular weight polyisobutylene rubber") in the range of 35 to 70 wt% (preferably 50 to 70 wt%) based on the entire pressure-sensitive adhesive layer. Therefore, the pressure-sensitive adhesive layer can maintain a sufficient adhesive strength so as to be attached to the electrode plate for the purpose of improving an insertion competence of the electrode such as winding and fixing terminals thereof or for the purpose of protecting a separator from a burr existing on the electrode plate. Additionally, even in the case where the tape is used in an environment at which a high pressure is applied, such as the case where the tape is used in the battery, the deformation of the pressure-sensitive adhesive layer and the spread of glue from the substrate can be prevented, whereby the elution to the electrolytic solution can be suppressed. Meanwhile, if the content of the high molecular weight polyisobutylene rubber exceeds the above range, the adhesive strength becomes insufficient, and therefore it is difficult to use the tape for the above purposes. In addition, if the content of the low molecular weight polyisobutylene rubber exceeds the above range, the cohesiveness property of the pressure-sensitive adhesive layer becomes low, and the pressure-sensitive adhesive layer is easily deformed, and therefore, when the tape is used in an inner part of a winding structure, since a high inner pressure is applied, glue is spread from the substrate to easily cause deterioration of the electrolytic solution.

In the present invention, the molecular weight is measured by the following method.

First, a sample is dissolved in tetrahydrofuran (solid content: 5%) to prepare a measurement sample. The molecular weight (as polystyrene equivalent) is measured by using this measurement sample with GPC method. In detail, the measurement is conducted by using HPLC8020 manufactured by TOSOH CORPORATION (column: TSKgel GMH-H (20), 2 set; solvent: tetrahydrofuran) under condition of flow rate of 0.5 mL/min.

The pressure-sensitive adhesive tape for a non-aqueous battery according to the present invention may contain other components than the components mentioned above in the pressure-sensitive adhesive layer, and may include, for example, appropriate additives such as an appropriate crosslinking agent, tackifier (for example, a rosin derivative resin, a polyterphene resin, a petroleum resin, and an oil-soluble phenol resin), a plasticizer, a filler, and an antioxidant.

The pressure-sensitive adhesive tape for a non-aqueous battery according to the present invention contains, in the pressure-sensitive adhesive layer, the component having a molecular weight of 10,000 or less in the content of 5 wt% or less (preferably 3 wt% or less) based on the entire pressure-sensitive adhesive layer. This can be implemented, for example, by controlling the additive amount of the low molecular weight component such as the tackifier or the antioxidant blended in the pressure-sensitive adhesive layer to 3 wt% or less (preferably 1 wt% or less). In addition, the lower limit of the content of the component having a molecular weight of 10,000 or less is 0. Since the component having a molecular weight of 10,000 or less is easily eluted to the electrolytic solution, the component may cause the deteriration of the electrolytic solution. In the present invention since the content of the component having a molecular weight of 10,000 or less is 5 wt% or less based on the pressure-sensitive adhesive layer, the component eluted to the electrolytic solution may be decreased, and therefore it is possible to considerably suppress the deterioration of the electrolytic solution. If the content of the component having a molecular weight of 10,000 or less exceeds 5 wt% based on the pressure-sensitive adhesive layer, it is not preferred because the component eluted to the electrolytic solution is increased, resulting in deterioration of the electrolytic solution.

Furthermore, in the present invention, an iodine value, which represents the unsaturation degree of the component contained in the pressure-sensitive adhesive layer and soluble to the electrolytic solution and is measured in accordance with JIS K 0070, is preferably 10 or less (more preferably 5 or less) and/or the unsaturation degree obtained by the NMR method is preferabley 0.5 [$10^{-2}$ mol/g] or less (more preferably 0.1 [$10^{-2}$ mol/g] or less). The compound in which the iodine value exceeds 10 and the unsaturation degree obtained by the NMR method exceeds 0.5 [$10^{-2}$ mol/g] tends to be eluted to the electrolytic solution in the battery and react with electrolytes (various salts) to promote combination with another component or self-decomposition of the electrolyte, thereby deteriorating the electrolytic solution.

Here, the unsaturation degree obtained by the NMR method is a value calculated from a peak area of protons derived from olefine obtained in proton NMR measurement based on peak areas of the samples having a known unsaturation degree as standards. In addition, the component soluble to the electrolytic solution in the present invention means, for example, a component soluble in the electrolytic solution when the pressure-sensitive adhesive layer is immersed in ethylene carbonate/diethyl carbonate (1 : 1) as the electrolytic solution at 40°C for 3 days.

As a method for forming the pressure-sensitive adhesive layer according to the present invention, a known method may be adopted, for example, a method comprising preparing a coating solution by diluting the polyisobutylene rubber with a solvent (for example, toluene, xylene, ethyl acetat and methyl ethyl ketone) if necessary, applying the solution onto a substrate or an appropriate separator (release paper), and then drying the solution.

The thickness of the pressure-sensitive adhesive layer according to the present invention is preferably, for example, in the range of 2 to 20 $\mu$m (more preferably 4 to 15 $\mu$m). If the thickness is smaller than 2 $\mu$m, it is tend to be difficult to obtain the suficient adhesive strength required for improving an insertion competence of an electrode into a battery case or for preventing a short-circuit between electrodes caused by the penetration of a burr existing on the electrode plate through the separator. Meanwhile, if the thickness exceeds 20 $\mu$m, the deformation of the pressure-sensitive adhesive tape or the spread of glue from the substrate may easily occur, as a results, the electrolyte is likely to deteriorate.

[Substrate]

The substrate is not limited to a particular type. There can be utilized an appropriate thin leaf body or laminated body of various substrates, for example, a fiber-based substrate such as cloth, non-woven fabric, felt and net; a paper-based substrate such as various papers; a metal-based substrate such as a metal foil and a metal plate; a plastic-based substrate such as a film or a sheet made of various resins; a rubber-based substrate such as a rubber sheet; and a foamed body such as a foamed sheet. The material or substance of the plastic-based substrate may include, for example, polyester (e.g., polyethylene terephthalate, polyethylene naphthalate, polybutylene terephthalate and polybutylene naphthalate), polyolefine (e.g., polyethylene, polypropylene and ethylene-propylene copolymer), polyvinyl alcohol, polyvinylidene chloride, polyvinyl chloride, vinyl chloride-vinyl acetate copolymer, polyvinyl acetate, polyamide, polyimide, celluloses, fluorine-based resin, polyether, polyether amide, polyphenylene sulfide, polystyrene-based resin (e.g., polystyrene), polycarbonate and polyethersulfone. In the present invention, among the above materials, it is preferred that a material that is difficult to be decomposed and degraded in respect to the electrolytic solution, and the plastic-based substrate such as polyimide, polyphenylene sulfide, and polyolefine such as polypropylene is preferred. In addition, the substrate may have a single-layered shape, or a multilayered shape.

On the surface of the substrate, if necessary, in order to increase adhesion with the pressure-sensitive adhesive layer, a known surface treatment, for example, oxidation treatment by a chemical or physical method, such as chromic acid treatment, ozone exposure, flame exposure, high pressure rapid exposure, and ionizing radiation treatment may be performed.

The thickness of the substrate is not particularly limited, but may be preferably about 8 to 100 $\mu$m and specifically preferably about 10 to 50 $\mu$m. If the thickness of the substrate is smaller than the above range, the strength of the pressure-sensitive adhesive tape becomes excessively low, such that practicability may be damaged. Meanwhile, if the thickness of the substrate is larger than the above range, a volume occupied in the battery may becomes excessively large, such that it tends to be difficult to implement high capacity of the battery.

The substrate according to the present invention preferably has a water absorption ratio of 3 wt% or less (e.g.,

preferably 2 wt% or less) when the substrate is allowed to stand under a condition of 23°C and 50% RH for 24 hours. A plastic-based substrate formed of polyimide, polyphenylene sulfide, polypropylene or the like is preferably used. If the water absorption ratio is larger than 3 wt%, it is likely to increase the risk of affecting the characteristic of the battery and the life span by promoting decomposition of the solute component in the battery.

In the present invention, the water absorption ratio may be obtained by the following method.
The pressure-sensitive adhesive tape is dried in an oven at 50°C for 24 hours, and cooled in a desiccator for 2 hours, and the weight is measured. Continuously, the tape is left in a thermo-hygrostat at 23°C and 50% RH for 24 hours. And then, the tape is taken therefrom to remove moisture, and the weight is meaured, to calculate the water absorption ratio from an increment of the weight compared with the weight before immersing.

The substrate of the present invention preferably has a piercing strength of 300 gf or more (e.g., more preferably 450 gf or more), and a plastic-based substrate formed of polyimide, polyphenylene sulfide, polyester or polypropylene is preferably used. If the piercing strength is smaller than the above range, it tends to be difficult to impart a function of protecting a separator from a burr or incorporated impurities existing on the electrode plate to the pressure-sensitive adhesive tape.

In the present invention, the piercing strength may be obtained by the following method.
The substrate is fixed to a plate in which a circular hole having a diameter of 11.28 mm is formed, and a needle of which the end has a curvature diameter of 0.5 mm pierces the substrate at a speed of 2 mm/s under $23 \pm 2$°C, and a maximum load (gf) when the needle penetrates the pressure-sensitive adhesive tape is measured.

The pressure-sensitive adhesive tape for a non-aqueous battery according to the present invention preferably has an electric insulation property, and the substrate having a volume resistivity of $1 \times 10^{10}$ $\Omega \cdot$cm or more (e.g., more preferably $1 \times 10^{12}$ $\Omega \cdot$cm or more) (for example, a plastic-based substrate formed of polyimide, polyphenylene sulfide, polyester and polypropylene) is preferably used. In the present invention, the volume resistivity is measured in accordance with JIS C 2107 (1999).

[Pressure-sensitive adhesive tape for non-aqueous battery]

The pressure-sensitive adhesive tape for a non-aqueous battery according to the present invention comprises the pressure-sensitive adhesive layer and the substrate.

As a method for manufacturing the pressure-sensitive adhesive tape for a non-aqueous battery according to the present invention, a known method may be adopted, for example, a method containing preparing a coating solution containing the polyisobutylene rubber and applying the coating solution directly on a substrate to form an pressure-sensitive adhesive layer, or a method containing applying the coating solution on an appropriate separator (release paper) to form an pressure-sensitive adhesive layer, and transferring the pressure-sensitive adhesive layer on a substrate. In the case of the transferring, a void may remain at an interface with the substrate. In this case, the void can be diffused and dissipated by performing heating and pressing treatment such as autoclave treatment.

In the pressure-sensitive adhesive tape for a non-aqueous battery according to the present invention obtained by the above-mentioned method, a gel fraction of the pressure-sensitive adhesive layer to the electrolytic solution (ethylene carbonate : diethyl carbonate = 1 : 1) is preferably 80 wt% or more (e.g., more preferably 90 wt% or more, and particularly preferably 93 wt% or more) in view of suppressing deterioration of the electrolytic solution at low level. If the gel fraction is smaller than 80 wt%, suppression of deterioration of the electrolytic solution tends to be difficult.

In addition, the pressure-sensitive adhesive tape for a non-aqueous battery according to the present invention preferably has a water absorption ratio (obtained by the above measurement method) of 3 wt% or less (e.g., more preferably 2 wt% or less) when left for 24 hours under a condition of 23°C and 50% RH. This can be achieved by using the substrate having a water absorption ratio of 3 wt% or less (e.g., more preferably 2 wt% or less) when left for 24 hours under a condition of 23°C and 50% RH. If the water absorption ratio is larger than 3 wt%, it is likely to increase the risk of affecting the characteristic of the battery and the life span, by promoting decomposition of the solute component in the battery.

The pressure-sensitive adhesive tape for a non-aqueous battery according to the present invention preferably has a piercing strength, obtained by the above measurement method, being 300 gf or more (e.g., preferably 450 gf or more). This can be achieved, for example, by using the substrate having a piercing strength, obtained by the above measurement method, of 300 gf or more (e.g., preferably 450 gf or more). If the piercing strength is smaller than the above range, it tends to be difficult to protect a separator from a burr or incorporated impurities existing on the electrode plate, such that it tends to be difficult to prevent a short-circuit.

Furthermore, the pressure-sensitive adhesive tape for a non-aqueous battery according to the present invention preferably has an electric insulation property, and also preferably has a volume resistivity of $1 \times 10^{10}$ $\Omega \cdot$cm or more (more preferably $1 \times 10^{12}$ $\Omega \cdot$cm or more). This can be achieved, for example, by using the substrate having a volume resistivity of $1 \times 10^{10}$ $\Omega \cdot$cm or more (e.g., more preferably $1 \times 10^{12}$ $\Omega \cdot$cm or more).

Moreover, in the pressure-sensitive adhesive tape for a non-aqueous battery according to the present invention, a separator (release liner) may be provided on the surface of the pressure-sensitive adhesive layer in view of protection of the surface of the pressure-sensitive adhesive layer and prevention of blocking. The separator is removed when the pressure-sensitive adhesive tape for a non-aqueous battery according to the present invention is attached to an adherend, but may not be necessarily provided. The separator to be used is not particularly limited, but a known release paper ore the like may be used. For example, there can be used a substrate having a release layer such as a plastic film or a paper, of which surface is treated by a release agent such as silicones, long chain alkyls, fluorines and molybdenum sulfides; a low adhesive substrate formed of a fluorine-based polymer such as polytetrafluoroethylene, polychlorotrifluoroethylene, polyvinyl fluoride, polyvinylidene fluoride, tetrafluoroethylene/hexafluoropropylene copolymer, and chlorofluoroethylene/vinylidene fluoride copolymer; and a low adhesive substrate formed of a non-polar polymer such as an olefine-based resin (for example, polyethylene, polypropylene, or the like).

When the pressure-sensitive adhesive tape for a non-aqueous battery according to the present invention is a double-coated pressure-sensitive adhesive tape, the separator may be provided on the surfaces of both of the pressure-sensitive adhesive layers of the pressure-sensitive adhesive tape for a non-aqueous battery according to the present invention. Alternatively, a separator having a rear side release layer may be provided on one pressure-sensitive adhesive surface of the pressure-sensitive adhesive tape, such that the rear side release layer of the separator comes into contact with the surface of the other pressure-sensitive adhesive surface on the opposite surface of the pressure-sensitive adhesive tape by winding the sheet.

The pressure-sensitive adhesive tape for a non-aqueous battery according to the present invention is suitably used for manufacturing a battery in which a non-aqueous electrolytic solution is sealed, such as a lithium ion battery.

The non-aqueous electrolytic solution is not particularly limited, but may include, for example, an electrolytic solution in which a mixed solvent of cyclic carbonates such as propylene carbonate (PC), and ethylene carbonate (EC), and chained carbonates such as dimethyl carbonate (DMC), ethyl methyl carbonate (EMC), and diethyl carbonate (DEC), and lithium salts such as $LiPF_6$ as an electrolyte are dissolved.

EXAMPLES

Hereinafter, the present invention is described in detail by Examples, but the present invention is not limited thereto.

Example 1

A coating solution 1 was prepared by diluting 100 parts by weight of polyisobutylene rubber having a weight average molecular weight of 1,000,000 (trade name: "Oppanol B100EP", manufactured by BASF Japan, Ltd.), and 20 parts by weight of polyisobutylene rubber having a weight average molecular weight of 300,000 (trade name: "Oppanol B30SF", manufactured by BASF Japan, Ltd.) with toluene.
The obtained coating solution 1 was applied on a polyimide film having a thickness of 25 $\mu$m so that the thickness after drying was 5 $\mu$m, and drying the solution, to thereby obtain an pressure-sensitive adhesive tape 1 (water absorption ratio: 1.4 wt%, volume resistivity: $1.3 \times 10^{17}$ $\Omega \cdot$cm) having the following pressure-sensitive adhesive layer 1.
Pressure-sensitive adhesive layer 1
Content of polyisobutylene rubber: 100 wt%
Content of polyisobutylene rubber having a molecular weight in the range of 800,000 to 2,200,000: 27 wt%
Content of polyisobutylene rubber having a molecular weight in the range of 10,000 to 700,000: 63 wt%
Content of the component having a molecular weight of 10,000 or less: 1 wt%

Example 2

A coating solution 2 was prepared by diluting 100 parts by weight of polyisobutylene rubber having a weight average molecular weight in the range of 1,000,000 (trade name: "Oppanol B100EP", manufactured by BASF Japan, Ltd.), and 30 parts by weight of polyisobutylene rubber having a weight average molecular weight of 120,000 (trade name: "Oppanol B12SF", manufactured by BASF Japan, Ltd.) with toluene.
The obtained coating solution 2 was applied on a polypropylene film having a thickness of 20 $\mu$m so that the thickness after drying was 15 $\mu$m, and drying the solution, to thereby obtain an pressure-sensitive adhesive tape 2 (water absorption ratio: 0.02 wt%, volume resistivity: $2.1 \times 10^{16}$ $\Omega \cdot$cm) having the following pressure-sensitive adhesive layer 2.
Pressure-sensitive adhesive layer 2
Content of polyisobutylene rubber: 100 wt%
Content of polyisobutylene rubber having a molecular weight in the range of 800,000 to 2,200,000: 23 wt%
Content of polyisobutylene rubber having a molecular weight in the range of 10,000 to 700,000: 68 wt%
Content of the component having a molecular weight of 10,000 or less: 2 wt%

Comparative Example 1

A coating solution 3 was prepared by diluting 100 parts by weight of the masticated natural rubber, 60 parts by weight of aliphatic hydrocarbon petroleum resin (trade name: "Escorez 1304", manufactured by Tonex Co., Ltd.), and 20 parts by weight of phenol resin (trade name: "RESITOP PS4609", manufactured by Gunei Chemical Industry Co., Ltd.) with toluene.
The obtained coating solution 3 was applied on a polyimide film having a thickness of 25 $\mu$m so that the thickness after drying was 5 $\mu$m, and drying the solution, to thereby obtain an pressure-sensitive adhesive tape 3 (water absorption ratio: 1.5 wt%, volume resistivity: $1.6 \times 10^{17}$ $\Omega \cdot$cm) having the following pressure-sensitive adhesive layer 3.
Pressure-sensitive adhesive layer 3
Content of polyisobutylene rubber: 0 wt%
Content of polyisobutylene rubber having a molecular weight in the range of 800,000 to 2,200,000: 0 wt%
Content of polyisobutylene rubber having a molecular weight in the range of 10,000 to 700,000:0 wt%
Content of the component having a molecular weight of 10,000 or less: 39 wt%

Comparative Example 2

A coating solution 4 was prepared by adding 2 parts by weight of the isocyanate curing agent (trade name: "Coronate L", manufactured by Nippon Polyurethane Industry Co., Ltd.) into 100 parts by weight of the copolymer obtained by copolymerizing 100 parts by weight of butyl acrylate and 10 parts by weight of the acrylic acid.
The obtained coating solution 4 was applied on a polypropylene film having a thickness of 20 $\mu$m so that the thickness after drying was 40 $\mu$m, and drying the solution, to thereby obtain an pressure-sensitive adhesive tape 4 (water absorption ratio: 0.03 wt%, volume resistivity: $1.3 \times 10^{16}$ $\Omega \cdot$cm) having the following pressure-sensitive adhesive layer 4.
Pressure-sensitive adhesive layer 4
Content of polyisobutylene rubber: 0 wt%
Content of polyisobutylene rubber having a molecular weight in the range of 800,000 to 2,200,000: 0 wt%
Content of polyisobutylene rubber having a molecular weight in the range of 10,000 to 700,000: 0 wt%
Content of the component having a molecular weight of 10,000 or less; 5 wt%

Comparative Example 3

A coating solution 5 was prepared in the same manner as in Example 1, except that the content of polyisobutylene rubber having a weight average molecular weight of 300,000 (trade name: "Oppanol B30SF", manufactured by BASF Japan, Ltd.) was changed from 20 parts by weight to 5 parts by weight.
The obtained coating solution 5 was applied on a polyimide film having a thickness of 25 $\mu$m so that the thickness after drying was 10 $\mu$m, and drying the solution, to thereby obtain an pressure-sensitive adhesive tape 5 (water absorption ratio: 1.6 wt%, volume resistivity: $1.5 \times 10^{17}$ $\Omega \cdot$cm) having the following pressure-sensitive adhesive layer 5.
Pressure-sensitive adhesive layer 5
Content of polyisobutylene rubber: 100 wt%
Content of polyisobutylene rubber having a molecular weight in the range of 800,000 to 2,200,000: 64 wt%
Content of polyisobutylene rubber having a molecular weight in the range of 10,000 to 700,000: 27 wt%
Content of the component having a molecular weight of 10,000 or less: 1 wt%

Comparative Example 4

A coating solution 6 was prepared in the same manner as in Example 1, except that the content of polyisobutylene rubber having a weight average molecular weight of 300,000 (trade name: "Oppanol B30SF", manufactured by BASF Japan Co., Ltd.) was changed from 20 parts by weight to 55 parts by weight.
The obtained coating solution 6 was applied on a polyimide film having a thickness of 25 $\mu$m so that the thickness after drying was 7 $\mu$m, and drying the solution, to thereby obtain an pressure-sensitive adhesive tape 6 (water absorption ratio: 1.4 wt%, volume resistivity: $1.3 \times 10^{17}$ $\Omega \cdot$cm) having the following pressure-sensitive adhesive layer 6.
Pressure-sensitive adhesive layer 6
Content of polyisobutylene rubber: 100 wt%
Content of polyisobutylene rubber having a molecular weight in the range of 800,000 to 2,200,000: 11 wt%
Content of polyisobutylene rubber having a molecular weight in the range of 10,000 to 700,000: 79 wt%
Content of the component having a molecular weight of 10,000 or less: 4 wt%
The pressure-sensitive adhesive tapes obtained in the Examples and Comparative Examples were evaluated by using the following methods.

[Eluting property test 1]

In each of the pressure-sensitive adhesive tapes obtained in the Examples and Comparative Examples, about 0.2 g of the pressure-sensitive adhesive layer was sampled and the weight thereof was measured ($A_0$). Continuously, after immersing into 50 ml of the electrolytic solution (ethylene carbonate: diethyl carbonate = 1:1) for 3 days under the atmosphere of 40°C, the sampled layer was taken therefrom, and heated at 120°C for 1 hour so as to evaporate the electrolytic solution, the weight thereof was measured ($A_1$), and the gel fraction was calculated by the following equation.

$$\text{Gel fraction (wt\%)} = A_1 \times 100/A_0$$

[Eluting property test 2]

The test samples were obtained by cutting the pressure-sensitive adhesive tapes obtained in the Examples and Comparative Examples into a size of 20 mm $\times$ 50 mm. The obtained test sample was immersed in an electrolytic solution (ethylene carbonate: diethyl carbonate =1:1) for 30 days under the atmosphere of 23°C. Thereafter, the test sample was drawn, and the condition of the electrolytic solution was visually observed.

[Measurement of piercing strength]

By using the compression test meter (trade name: "KES-G5", manufactured by Kato Tech Co., Ltd.), circular hole having a diameter of 11.28 mm), the piercing test of the pressure-sensitive adhesive tapes obtained in the Examples and Comparative Examples was performed under the following condition, and the maximum load (gf) at the break point was observed (see FIG. 3).
Measurement condition
Temperature: 23 $\pm$ 2°C
Piercing needle: needle of which the end has a curvature diameter of 0.5 mm
Piercing speed: 2 mm/s

[Adhesion property test]

The pressure-sensitive adhesive tapes obtained in the Examples and Comparative Examples were attached to the negative plate for a lithium ion battery under the condition of 23°C and 50% RH at the speed of 300 mm/min, and immersed in an electrolytic solution directly, and the bonding condition of the pressure-sensitive adhesive tape was visually observed and evaluated on the basis of the following standard.
Evaluation standard
no stripped portion was observed: A
stripped portion was observed partially: B

[Shape stability test]

The pressure-sensitive adhesive tapes obtained in the Examples and Comparative Examples were cut into a size of 10 mm $\times$ 200 m and winding the tapes, to obtained rolls. The obtained roll was left under the atmosphere of 40°C and 92% RH for 10 days, and the weaving amount of the pressure-sensitive adhesive tape was measured and evaluated on the basis of the following standard.
Evaluation standard
Weaving amount was within 1 mm: A
Weaving amount was more than 1 mm: B

The above evaluation results are shown in the following Table.
[TABLE 1]

| | Eluting Property Test | | Piercing Strength (gf) | Adhesion Property | Dimensional Stability |
|---|---|---|---|---|---|
| | Gel Fraction (wt%) | Electrolytic Solution | | | |
| Example 1 | 95 | no change | 640 | A | A |
| Example 2 | 90 | no change | 480 | A | A |
| Comparative Example 1 | 73 | discolored | 640 | A | A |
| Compartive Example 2 | 85 | discolored | 480 | A | A |
| Compartive Example 3 | 92 | no change | 480 | B | A |
| Compartive Example 4 | 90 | no change | 480 | A | B |

While the present invention has been described in detail and with reference to the specific embodiments thereof, it will be apparent to one skilled in the art that various changes and modifications can be made therein without departing from the spirit and scope thereof.

The present application is based on Japanese Patent Applications No. 2010-191156 filed on August 27, 2010 and No. 2011-182461 filed on August 24, 2011, and the entire contents thereof are incorporated herein by reference. All references cited herein are incorporated in their entirety.

**Claims**

1. A pressure-sensitive adhesive tape for a non-aqueous battery, comprising:

   a substrate and
   a pressure-sensitive adhesive layer provided on at least one side of the substrate,
   wherein the pressure-sensitive adhesive layer contains 90 wt% or more of a polyisobutylene rubber, and
   wherein a content of a polyisobutylene rubber having a molecular weight of 800,000 to 2,200,000 is in the range of 15 to 50 wt% based on the entire pressure-sensitive adhesive layer, a content of a polyisobutylene rubber having a molecular weight of 10,000 to 700,000 is in the range of 35 to 70 wt% based on the entire pressure-sensitive adhesive layer, and a content of a component having a molecular weight of 10,000 or less is 5 wt% or less based on the entire pressure-sensitive adhesive layer.

2. The pressure-sensitive adhesive tape for a non-aqueous battery according to claim 1,
   wherein the pressure-sensitive adhesive tape has a water absorption ratio, when allowed to stand under a condition of 23°C and 50% RH for 24 hours, of 3 wt% or less.

3. The pressure-sensitive adhesive tape for a non-aqueous battery according to claim 1 or 2,
   wherein the pressure-sensitive adhesive tape has a piercing strength, obtained by the following measuring method, of 300 gfor more, and
   wherein the measuring method comprises fixing the pressure-sensitive adhesive tape to a plate in which a circular hole having a diameter of 11.28 mm is formed, piercing a needle of which the end has a curvature diameter of 0.5 mm to the pressure-sensitive adhesive tape at a speed of 2 mm/s under $23 \pm 2°C$, and measuring a maximum load (gf) when the needle penetrates the pressure-sensitive adhesive tape.

4. The pressure-sensitive adhesive tape for a non-aqueous battery according to any one of claims 1 to 3, wherein the pressure-sensitive adhesive tape has a volume resistivity of $1 \times 10^{10}$ Ω·cm or more.

5. The pressure-sensitive adhesive tape for a non-aqueous battery according to any one of claims 1 to 4, wherein the pressure-sensitive adhesive layer has a gel fraction (solvent: ethylene carbonate/diethyl carbonate = 1/1) of 80 wt% or more.

## FIG. 1

## FIG. 2

## FIG. 3

11.28 mm

Europäisches
Patentamt

European
Patent Office

Office européen
des brevets

## EUROPEAN SEARCH REPORT

Application Number

EP 11 17 9030

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 747 132 A (MATSUI KOMAHARU [JP] ET AL) 5 May 1998 (1998-05-05) * abstract; example 1 * ----- | 1-5 | INV. C09J7/02 H01M2/08 C08L23/22 C09J123/22 |
| X,P | WO 2011/011318 A1 (MYLAN INC [US]; BAIRD RUSSELL ADAM [US]; BARNETT BRAD L [US]; BESTE RU) 27 January 2011 (2011-01-27) * abstract * * paragraph [0016] - paragraph [0018]; claims 1,5,8,15,16; examples * ----- | 1-5 | |
| A,D | JP 9 165557 A (TERAOKA SEISAKUSHO KK) 24 June 1997 (1997-06-24) * abstract * * claims; examples * ----- | 1-5 | |
| A | "Oppanol B types", Technical Information TI/ES 1415 us, October 2005 (2005-10), pages 1-11, XP55014185, Retrieved from the Internet: URL:http://worldaccount.basf.com/wa/NAFTA˜en_US/Catalog/ChemicalsNAFTA/doc4/BASF/PRD/30059115/.pdf?title=&asset_type=pi/pdf&language=EN&urn=urn:documentum:eCommerce_sol_EU:09007bb28001eca2.pdf [retrieved on 2011-12-07] ----- | 1 | TECHNICAL FIELDS SEARCHED (IPC) C09J H01M C08L |

The present search report has been drawn up for all claims

| Place of search | Date of completion of the search | Examiner |
|---|---|---|
| Munich | 9 December 2011 | Meier, Stefan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 11 17 9030

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2011

| Patent document cited in search report | | Publication date | Patent family member(s) | | Publication date |
|---|---|---|---|---|---|
| US 5747132 | A | 05-05-1998 | US<br>US | RE40723 E1<br>5747132 A | 09-06-2009<br>05-05-1998 |
| WO 2011011318 | A1 | 27-01-2011 | US<br>WO | 2011020426 A1<br>2011011318 A1 | 27-01-2011<br>27-01-2011 |
| JP 9165557 | A | 24-06-1997 | JP<br>JP | 3473929 B2<br>9165557 A | 08-12-2003<br>24-06-1997 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9165557 A
- JP 2010191156 A
- JP 2011182461 A